# EUROPÄISCHE PATENTSCHRIFT

(11) **EP 3 115 243 B1**
(45) Veröffentlichungstag und Bekanntmachung des Hinweises auf die Patenterteilung: **15.08.2018**
(21) Anmeldenummer: 16001401.5
(22) Anmeldetag: 22.06.2016
(51) Int. Cl.: B60K 11/08, B60K 16/00, B60L 8/00, F03D 9/00

(54) **FAHRZEUG MIT EINER EINRICHTUNG ZUR WINDENERGIEGEWINNUNG**
VEHICLE WITH A DEVICE FOR GENERATING WIND ENERGY
VEHICULE COMPORTANT UN DISPOSITIF DE PRODUCTION D'ENERGIE EOLIENNE

(30) Priorität: 04.07.2015 DE 102015008671
(43) Veröffentlichungstag der Anmeldung: 11.01.2017
(73) Patentinhaber: MAN Truck & Bus AG, 80995 München (DE)
(72) Erfinder: Schlosser, Rupert, 80935 München (DE)
(74) Vertreter: v. Bezold & Partner Patentanwälte - PartG mbB

(56) Entgegenhaltungen:
- WO-A1-2010/004551
- DE-A1-102011 006 729
- US-A1- 2012 056 428
- US-A1- 2014 320 060

## Beschreibung

Die Erfindung betrifft ein Fahrzeug mit zumindest einer Einrichtung zur Windenergiegewinnung mittels Fahrtwind, insbesondere zumindest einem Windrad und/oder zumindest einer Windturbine. Das Fahrzeug ist ein Kraftfahrzeug, insbesondere ein Nutzfahrzeug, z. B. ein Lastkraftwagen.

Im Stand der Technik sind Fahrzeuge mit Einrichtungen zur Windenergiegewinnung bereits bekannt. So offenbart die DE 10 2013 011 116 A1 z. B. ein Fahrzeug mit einem Fahrzeugaufbau und einem Windrad, wobei das Windrad einen mit einem Bordnetz des Fahrzeugs elektrisch gekoppelten Generator nach Art einer rotierenden elektrischen Maschine rotierend antreibt. Das Windrad ist zwischen einer Betriebsstellung und einer Bereitschaftsstellung am Fahrzeug verfahrbar angeordnet, wobei die Betriebsstellung des Windrads für einen Ruhebetrieb des Fahrzeugs vorgesehen ist und ein Fahrbetrieb des Fahrzeugs in der Bereitschaftsstellung des Windrads ermöglicht ist. Ein Fahrzeug mit einer an unterschiedlichen Positionen angeordneten Einrichtung zur Windenergiegewinnung ist aus der US 2014/0320060 A1 bekannt.

Eine Aufgabe der Erfindung ist es, ein verbessertes und/oder alternatives Fahrzeug zu schaffen, mittels dem Fahrtwind nutzbar ist, vorzugsweise zur Windenergiegewinnung und/oder zur Erzielung einer Bremswirkung.

Diese Aufgabe kann mit den Merkmalen des unabhängigen Anspruchs gelöst werden. Vorteilhafte Weiterbildungen der Erfindung können den Unteransprüchen und der folgenden Beschreibung bevorzugter Ausführungsformen der Erfindung entnommen werden.

Die Erfindung schafft ein Kraftfahrzeug, nämlich einen Lastkraftwagen oder einen Transporter, insbesondere Kleintransporter.

Das Fahrzeug weist zumindest eine Einrichtung zur Windenergiegewinnung mittels Fahrtwind, das heißt zumindest ein Windrad und/oder zumindest eine Windturbine, auf. Die Windenergiegewinnung erfolgt somit zweckmäßig durch insbesondere direkte und/oder indirekte Fahrtwindbeaufschlagung der Einrichtung während des Fahrbetriebs des sich fortbewegenden Fahrzeugs. Das Fahrzeug zeichnet sich insbesondere dadurch aus, dass es zumindest ein öffenbares und schließbares Luftleitelement aufweist, um in einem Öffnungszustand die Einrichtung zur Windenergiegewinnung mittels Fahrtwind freizulegen und um in einem Schließzustand die Einrichtung vorzugsweise aerodynamisch von Fahrtwind abzuschirmen.

Ergänzend zeichnet sich das Fahrzeug insbesondere dadurch aus, dass es ein öffenbares und schließbares Luftleitelement umfasst, das auf dem Fahrzeugdach angeordnet oder darin integriert ist und in einem Öffnungszustand ein Fahrtwind-Fangmaul zum Einfangen von Fahrtwind bildet.

Das Luftleitelement, insbesondere das Fahrtwind-Fangmaul, kann im Öffnungszustand vorzugsweise als Bremsorgan wirken, z. B. ähnlich einem horizontal wirkenden Bremsfallschirm.

Es ist möglich, dass das Luftleitelement für einen Bremsvorgang des sich fortbewegenden Fahrzeugs in den Öffnungszustand gebracht wird, wodurch vorzugsweise der Bremsvorgang per se erzeugt oder die Bremswirkung einer Fahrzeugbremsanlage unterstützt werden kann. Alternativ oder ergänzend ist es möglich, dass für einen Fahrbetrieb des Fahrzeugs ohne Bremsvorgang das Luftleitelement in den Schließzustand gebracht wird. Das Fahrzeug kann hierzu z. B. eine zweckmäßig elektronische Steuereinrichtung zur Steuerung des Luftleitelements in den Schließ- und den Öffnungszustand aufweisen.

Das Luftleitelement wird vorzugsweise für einen Bergabfahrt-Bremsvorgang des Fahrzeugs und/oder für einen Dauerbremsvorgang des Fahrzeugs in den Öffnungszustand gebracht, so dass die Windenergiegewinnung insbesondere während dieses Zeitraums erfolgen kann, wodurch der Luftwiderstand des Fahrzeugs erhöht wird und somit die Bremswirkung des Fahrzeugs erhöht und/oder unterstützt wird, insbesondere zusätzlich zur Bremswirkung der Fahrzeugbremsanlage.

Bei vielen Fahrzeugen wird eine Dauerbremskraftübertragung nur über eine Achse übertragen, so dass hierfür Grenzen gesetzt sind. Die Kraftübertragung wird insbesondere von der beladungsabhängigen Achslast, von der Witterung, von der Fahrbahnbeschaffenheit, von der Topografie, von der Straßenführung und/oder den Reifen des Fahrzeugs beeinflusst.

Ein weiterer Vorteil ist, dass sich im Dauerbremsbetrieb bei Bergabfahrt eine Fahrzeugkühlung nicht oder nur vermindert aufheizt und bei einer anschließenden Weiterfahrt und/oder anschließenden Bergauffahrt des Fahrzeugs Kühlwasser auf normaler oder nur geringfügig erhöhter Betriebstemperatur ist und nicht oder nur vermindert heruntergekühlt werden muss.

Des Weiteren ist es möglich, bei Bergabfahrt die Kühlwassertemperatur unter die Betriebstemperatur herunter zu kühlen, um bei einer anschließenden Bergauffahrt mehr Kühlreserven zu haben, so dass dementsprechend z. B. die Einschaltzeit eines Lüfters vermieden oder minimiert werden kann. Bei z. B. einem motorseitig angetriebenen Lüfter käme es somit zu keinem Leistungsverlust (ein voll zugeschalteter Lüfter kann z. B. je nach Ausführung bis zu 50 kW benötigen), was dementsprechend mit einer zusätzlichen Kraftstoffeinsparung einhergeht.

Das Fahrzeug kann ein oder mehrere öffenbare und schließbare Luftleitelemente für die Einrichtung aufweisen.

Die Einrichtung ist im Fahrzeugdach integriert, und zwar in einem vorderen Fahrzeugdachabschnitt.

Das Luftleitelement ist vorzugsweise auf dem Fahrzeugdach angeordnet oder im Fahrzeugdach integriert, z. B. in einem vorderen Fahrzeugdachabschnitt.

Das Fahrzeugdach kann z. B. ein Fahrzeugdach eines Lastkraftwagen-Fahrerhauses oder eines Kraftfahrzeug-Transporters sein.

Das Luftleitelement kann allerdings auch Teil einer Fahrzeugfront sein, z. B. in die Fahrzeugfront integriert.

Das Luftleitelement kann nicht-erfindungsgemäß allerdings auch hinter einem Kühlergrill angeordnet sein. Hierbei umfasst die Einrichtung vorzugsweise ein Lüfterrad für einen Fahrzeugkühler, so dass die Einrichtung eine Doppelfunktion übernehmen kann, nämlich als Lüfterrad bzw. Windenergiegewinnungseinrichtung fungieren kann. Die Fahrzeugfront ist zweckmäßig unter der Front-Windschutzscheibe des Fahrzeugs angeordnet und/oder vor einem Fahrzeugkühler. Das Lüfterrad ist zweckmäßig in Fahrtwindrichtung hinter dem Luftleitelement angeordnet.

Das Luftleitelement dient vorzugsweise dazu, im Öffnungszustand, zweckmäßig während eines Bremsvorgangs des Fahrzeugs, Fahrtwind zur Einrichtung zu leiten, und/oder im Schließzustand, zweckmäßig im Fahrbetrieb des Fahrzeugs ohne Bremsvorgang, die Einrichtung insbesondere aerodynamisch von Fahrtwind abzuschirmen. Das Luftleitelement kann hierzu vorzugsweise verstellbar ausgeführt sein, z. B. verfahrbar und/oder verschwenkbar, insbesondere ein- und ausfahrbar und/oder ein- und ausschwenkbar. Dadurch kann das Luftleitelement in einen Schließ- und zumindest einen Öffnungszustand gebracht werden.

Das Luftleitelement nimmt insbesondere während eines Bremsvorgangs des Fahrzeugs den Öffnungszustand an und im Fahrbetrieb des Fahrzeugs ohne Bremsvorgang den Schließzustand.

Das Luftleitelement dient somit zweckmäßig im Fahrbetrieb des Fahrzeugs ohne Bremsvorgang zur Abschirmung der Einrichtung von Fahrtwind, so dass die Einrichtung zweckmäßig den Luftwiderstand des Fahrzeugs nicht erhöht.

Das Luftleitelement kann allerdings während eines Bremsvorgangs des Fahrzeugs zur zweckmäßig direkten und/oder indirekten Fahrtwindanströmung der Einrichtung und somit zur Windenergiegewinnung die Einrichtung zumindest abschnittsweise freilegen.

Das Luftleitelement kann z. B. ausgeformt sein, um im Öffnungszustand Fahrtwind einzufangen und somit vorzugsweise eine Art Fahrtwind-Fangmaul auszubilden, z. B. um Fahrtwind von außerhalb der Fahrzeugkontur, insbesondere der Fahrzeugkontur mit dem Luftleitelement im Schließzustand, einzufangen. Das Fangmaul kann ähnlich einem im Wesentlichen horizontalen Fallschirm wirken.

Es ist möglich, dass durch das Luftleitelement im Öffnungszustand der Luftwiderstand des Fahrzeugs erhöht wird und/oder die Fahrtwindanströmfläche des Fahrzeugs größer ist als im Schließzustand, so dass z. B. eine Unterstützung eines Bremsvorgangs des Fahrzeugs und/oder eine Vergrößerung der Fahrtwindanströmung der Einrichtung erzielt werden kann.

Das Luftleitelement kann zweckmäßig also im Rahmen der Erfindung nicht nur eine bloße Luftdurchlassöffnung bilden, wie z. B. bei Rollos, Jalousien und Klappen im Frontbereich von Kraftfahrzeugen üblich, sondern kann Fahrtwind, vorzugsweise für die Einrichtung, z. B. außerhalb der eigentlichen Fahrzeugkontur einfangen.

Es ist möglich, dass das Fahrtwind-Fangmaul zwischen dem Luftleitelement im Öffnungszustand und einem darunter angeordneten Fahrzeugdach- und/oder Fahrzeugfrontbereich ausgebildet wird. Es ist vorzugsweise zur Vorderseite des Fahrzeugs hin öffenbar.

Das Fahrtwind-Fangmaul kann z. B. einen Fahrtwindstauraum umfassen und das Luftleitelement kann den Fahrtwindstauraum zweckmäßig zur Oberseite hin zumindest abschnittsweise begrenzen und/oder zumindest abschnittsweise überspannen. Dadurch kann, wie erwähnt, das Fahrtwind-Fangmaul zweckmäßig einen horizontal wirkenden Bremsfallschirm imitieren.

Das Luftleitelement kann im Öffnungszustand z. B. entgegen der Fahrtwindrichtung nach vorne zweckmäßig auslegerförmig auskragen, insbesondere schräg nach oben, schräg nach unten oder im Wesentlichen parallel, optional sogar über den Fahrzeugfrontbereich nach vorne hinaus.

Das Luftleitelement kann z. B. ein Spoilerelement und/oder ein Dachelement umfassen, z. B. eine Dachklappe, insbesondere Hochdachklappe.

Das Luftleitelement kann ferner z. B. eine Seitenklappe umfassen.

Das Luftleitelement kann ebenfalls zumindest eine verstellbare Klappe, zumindest einen verstellbaren Rollo und/oder zumindest eine verstellbare Jalousie umfassen, z. B. an der Fahrzeugfront oder darin integriert.

Es ist möglich, dass das Luftleitelement zweckmäßig im Schließzustand abschnittsweise einen Teil des Fahrzeugdachs und abschnittsweise einen Teil der Fahrzeugfront bildet. Es kann sich z. B. von einem Fahrzeugdachbereich bis in einen Fahrzeugfrontbereich erstrecken.

Das Luftleitelement umfasst vorzugsweise mehrere Öffnungszustände, z. B. zur Beeinflussung der Fahrtwindanströmung der Einrichtung und/oder zur Beeinflussung der Bremswirkung. Hierzu kann das Luftleitelement zweckmäßig stufenlos oder stufenweise verstellbar sein.

Es ist möglich, dass das Fahrzeug zumindest eine Umwandlungseinrichtung zur Umwandlung gewonnener Windenergie in elektrische Energie, hydraulische Energie, Druckluft-Energie und/oder Gyro-Energie (z. B. Schwungmassenspeicher) umfasst und/oder eine oder mehrere Speichereinrichtungen zur Speicherung hiervon.

Es ist möglich, dass gewonnene Windenergie zur Kühlung einer Fahrzeugkühlung und/oder zur Klimatisierung eines Fahrzeuginnenraums genutzt wird.

Gewonnene Windenergie kann unterstützend eingesetzt werden und/oder als alleiniger Energieerzeuger.

Insbesondere kann die Einrichtung zur Windenergiegewinnung als alleiniger Energieerzeuger für eine Klimaanlage des Fahrzeugs verwendet werden. Wenn z. B. die Windenergiegewinnung aus dem Brems- und/oder Dauerbremsvorgang nicht ausreichen würde, so könnte ebenfalls im Fahrbetrieb ohne Bremsvorgang die Windenergiegewinnung ausgeführt werden.

Die Einrichtung ist vorzugsweise so angeordnet, dass sie zweckmäßig im Öffnungszustand des Luftleitelements von Fahrtwind direkt anströmbar ist und zusätzlich Fahrtwind auf den Frontbereich des Fahrzeugs mittels des Frontbereichs zur Einrichtung geleitet wird.

Der Fahrzeugfrontbereich umfasst insbesondere eine Front-Windschutzscheibe des Fahrzeugs. Zumindest ein Luftleitelement kann höher als die Front-Windschutzscheibe angeordnet sein. Alternativ oder ergänzend kann zumindest ein Luftleitelement tiefer als die Front-Windschutzscheibe angeordnet sein.

Es ist möglich, dass ein Luftleitschacht auf dem Fahrzeugdach angeordnet oder darin integriert ist, z. B. um Fahrtwind zur Einrichtung zu leiten und/oder um Fahrtwind aus der Einrichtung abzuleiten. Der Luftleitschacht kann zumindest abschnittsweise durch das Luftleitelement begrenzt werden.

Der Luftleitschacht und der Fahrtwindstauraum können im Rahmen der Erfindung ein und dieselbe Funktionseinheit bilden. So kann z. B. der Luftleitschacht die Funktion des Fahrtwindstauraums übernehmen oder umgekehrt.

Der Querschnitt des Luftleitschachts kann sich, vorzugsweise im Öffnungszustand des Luftleitelements, zur Einrichtung hin zumindest abschnittsweise verjüngen, was zweckmäßig zu einer Erhöhung der Luftgeschwindigkeit führt. Der Querschnitt kann sich z. B. in Höhen- und/oder Querrichtung des Fahrzeugs verjüngen.

Ferner kann ein Fahrzeugbauteil mit zumindest einer Luftdurchlassöffnung in Fahrtwindrichtung hinter der Einrichtung angeordnet sein, um die Einrichtung auf der Fahrzeugrückseite zumindest abschnittsweise abzudecken, zugleich aber Fahrtwind aus der Einrichtung hindurchzulassen.

Der Luftleitschacht und/oder das Fahrzeugbauteil sind ebenfalls vorzugswiese auf dem Fahrzeugdach angeordnet oder darin integriert.

Das Fahrzeug kann mehrere Einrichtungen zur Windenergiegewinnung mittels Fahrtwind aufweisen.

Den einzelnen Einrichtungen können verschiedene Fahrzeug-Verbraucher und/oder verschiedene Umwandlungsenergien zugeordnet werden. Alternativ oder ergänzend können den einzelnen Einrichtungen unabhängig voneinander betreibbare Luftleitelemente zugeordnet werden.

Es ist möglich, dass das Fahrzeug z. B. eine Bremsvorgang-Erfassungs-Vorrichtung umfasst, zur Erfassung eines (z. B. stattfindenden oder kurz bevorstehenden und/oder prognostizierten) Bremsvorgangs.

Das Luftleitelement kann mit der Bremsvorgangs-Erfassungs-Vorrichtung zweckmäßig unmittelbar oder mittelbar, z. B. über eine Steuereinrichtung, in Wirkverbindung stehen, um in Reaktion auf einen erfassten Bremsvorgang geöffnet zu werden, so dass es für einen Bremsvorgangs des Fahrzeugs in den Öffnungszustand gebracht wird.

Der Bremsvorgang kann durch eine Fahrzeugbremsanlage ausgeführt werden, so dass die Fahrzeugbremsanlage durch die Bremswirkung unterstützt werden kann, die durch die Einrichtung zur Windenergiegewinnung und/oder das Luftleitelement im Öffnungszustand erzeugt wird. Alternativ oder ergänzend kann der Bremsvorgang durch die Bremswirkung ausgeführt werden, die durch die Einrichtung zur Windenergiegewinnung und/oder das Luftleitelement im Öffnungszustand erzeugt wird.

Die Fahrzeugbremsanlage umfasst insbesondere die Betriebsbremse, Motorbremse und/oder Zusatzbremse, z. B. Retarderbremse, des Fahrzeugs.

Die Fahrzeugbremsanlage kann z. B. Reibungs-basiert, Flüssigkeits-basiert und/oder pneumatisch-basiert, etc. ausgeführt sein. Sie kann z. B. eine Rekuperationsbremse umfassen.

Der Bremsvorgang kann zweckmäßig zu einer Geschwindigkeitsreduzierung des Fahrzeugs führen, so dass sich das Fahrzeug vorzugsweise verlangsamt.

Der Bremsvorgang kann zweckmäßig dazu führen, dass das Fahrzeug mit im Wesentlichen konstanter Geschwindigkeit eine Bergabfahrt durchführt, so dass der Bremsvorgang vorzugsweise zu keiner Geschwindigkeitsreduzierung führt, sondern das Fahrzeug auf im Wesentlichen konstanter Geschwindigkeit hält.

Es ist möglich, dass zunächst das Luftleitelement in den Öffnungszustand gebracht wird und/oder die Windenergiegewinnung mittels Fahrtwind erfolgt, was zu einem Bremsvorgang des Fahrzeugs führt, und die Fahrzeugbremsanlage erst bei höherer Bremsanforderung des Fahrzeugs aktiviert, insbesondere dazu geschaltet, wird, um z. B. eine zusätzliche Bremswirkung zu erreichen.

Die Fahrzeugbremsanlage kann z. B. aktiviert, insbesondere dazu geschaltet, werden durch eine Bremspedalbetätigung des Fahrzeugführers und alternativ oder ergänzend durch eine zweckmäßig elektronische Steuereinrichtung, insbesondere Fahrzeugsteuereinrichtung, z. B. in Abhängigkeit einer vordefinierten Geschwindigkeit des Fahrzeugs, in Abhängigkeit einer erfassten Notbremssituation und/oder in Abhängigkeit eines Abstands zu einem vorausfahrenden Fahrzeug.

Zu erwähnen ist, dass die Einrichtung zur Windenergiegewinnung direkt an das von der Einrichtung mit Energie versorgte Aggregat verbaut sein kann oder eine Kraftübertragung über einen Keilriemen, eine Welle, z. B. eine Gelenkwelle, und/oder eine Zahnradkonstruktion erfolgen kann.

Zu erwähnen ist außerdem, dass das Fahrzeug insbesondere eine vorzugsweise elektronische Steuereinrichtung zur Steuerung des Luftleitelements in den Öffnungs- und Schließzustand aufweisen kann. Die Steuereinrichtung kann z. B. die Fahrzeugsteuereinrichtung sein.

Zu erwähnen ist des Weiteren, dass das Luftleitelement einen Teil der Fahrzeughaut bilden kann.

Die Einrichtung zur Windenergiegewinnung ist vorzugsweise am Fahrzeug starr und/oder positionsfixiert verbaut und kann somit z. B. nicht ein- und ausgefahren oder ein- und ausgeschwenkt werden.

Das Fahrzeug ist ein Kraftfahrzeug, insbesondere ein Nutzfahrzeug.

Die zuvor beschriebenen bevorzugten Ausführungsformen und Merkmale der Erfindung sind miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine Seitenansicht eines Fahrzeugs gemäß einer Ausführungsform, die nicht erfindungsgemäß ist,
- Figur 2: zeigt eine Vorderansicht des Fahrzeugs der Figur 1,
- Figur 3: zeigt eine Vorderansicht des Fahrzeugs der Figuren 1 und 2 mit zu Darstellungszwecken freigelegter Einrichtung zur Windenergiegewinnung,
- Figur 4: zeigt eine Vorderansicht eines Fahrzeugs gemäß einer Ausführungsform der Erfindung mit geschlossenem Luftleitelement,
- Figur 5: zeigt eine Seitenansicht des Fahrzeugs der Figur 4 mit geöffnetem Luftleitelement,
- Figur 6: zeigt eine Vorderansicht des Fahrzeugs der Figuren 4 und 5, ebenfalls mit geöffnetem Luftleitelement,
- Figur 7: zeigt eine Seitenansicht eines Fahrzeugs gemäß einer Ausführungsform mit geschlossenem Luftleitelement, die nicht erfindungsgemäß ist,
- Figur 8: zeigt eine Vorderansicht des Fahrzeugs der Figur 7 mit geschlossenem Luftleitelement,
- Figur 9: zeigt eine Seitenansicht des Fahrzeugs der Figuren 7 und 8 mit geöffnetem Luftleitelement,
- Figur 10: zeigt eine Vorderansicht des Fahrzeugs der Figuren 7 bis 9 mit geöffnetem Luftleitelement,
- Figur 11: zeigt eine Seitenansicht eines Fahrzeugs gemäß einer Ausführungsform mit geschlossenem Luftleitelement, die nicht erfindungsgemäß ist;
- Figur 12: zeigt eine Vorderansicht des Fahrzeugs der Figur 11 mit geschlossenem Luftleitelement,
- Figur 13: zeigt eine Seitenansicht des Fahrzeugs der Figuren 11 und 12 mit geöffnetem Luftleitelement,
- Figur 14: zeigt eine Vorderansicht des Fahrzeugs der Figuren 11 bis 13 mit geöffnetem Luftleitelement,
- Figur 15: zeigt eine Vorderansicht eines Fahrzeugs gemäß einer anderen Ausführungsform der Erfindung mit geschlossenem Luftleitelement,
- Figur 16: zeigt eine Seitenansicht des Fahrzeugs der Figur 15 mit geschlossenem Luftleitelement,
- Figur 17: zeigt eine Vorderansicht des Fahrzeugs der Figuren 15 und 16 mit geöffnetem Luftleitelement, und
- Figur 18: zeigt eine Seitenansicht des Fahrzeugs der Figuren 15 bis 17 mit geöffnetem Luftleitelement.

Die unter Bezugnahme auf die Figuren beschriebenen Ausführungsformen stimmen teilweise überein, so dass ähnliche oder identische Teile mit den gleichen Bezugszeichen versehen sind und zu deren Erläuterung auch auf die Beschreibung der anderen Figuren bzw. Ausführungsformen verwiesen wird, um Wiederholungen zu vermeiden.

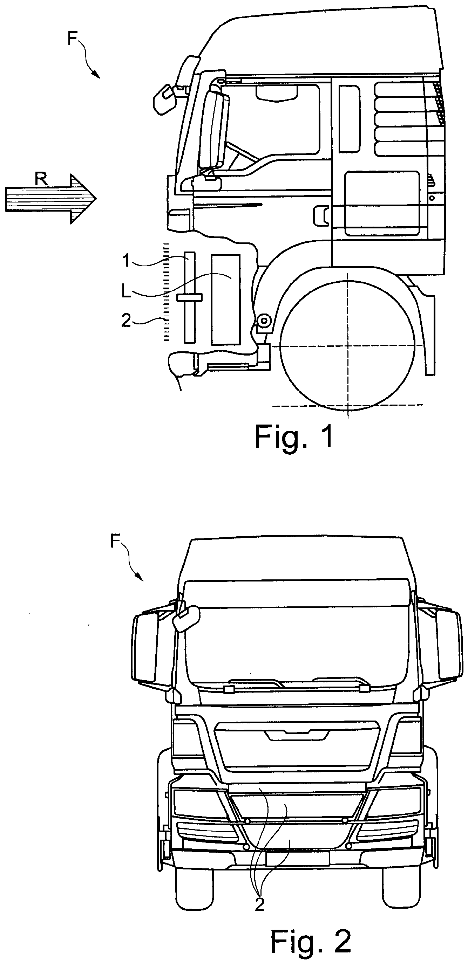

Figur 1 zeigt eine Seitenansicht eines Fahrzeugs F mit einer Weglassung zu Illustrationszwecken, so dass eine Einrichtung 1 zur Windenergiegewinnung mittels Fahrtwind, insbesondere ein Windrad und/oder eine Windturbine, und ein in Fahrtwindrichtung R dahinter angeordneter Fahrzeugkühler L gesehen werden kann. Die Einrichtung 1 zur Windenergiegewinnung ist somit zweckmäßig ein Windrad in Form eines Lüfterrads. Die Einrichtung 1 kann somit eine Doppelfunktion übernehmen. Bezugszeichen R kennzeichnet zugleich Fahrtwind auf das Fahrzeug F, insbesondere auf die Fahrzeugfront.

Figur 1 zeigt außerdem ein schematisch dargestelltes, in die Fahrzeugfront integriertes öffen- und schließbares Luftleitelement 2. Das Luftleitelement 2 kann in der in Figur 1 gezeigten Ausführungsform ein Rollo oder eine Jalousie mit z. B. mehreren Klappen umfassen.

Die Windenergiegewinnung mittels Fahrtwind erfolgt mit dem Luftleitelement 2 im Öffnungszustand und insbesondere während eines durch die eigentliche, z. B. pneumatische, insbesondere Druckluft-basierte, Fahrzeugbremsanlage ausgeführten Bremsvorgangs des sich fortbewegenden Fahrzeugs F, insbesondere bei einer Bergabfahrt im Brems-, insbesondere Dauerbremsbetrieb des Fahrzeugs F.

Das Fahrzeug F kann z. B. eine Bremsvorgang-Erfassungs-Vorrichtung zur Erfassung eines stattfindenden und/oder prognostizierten, z. B. kurz bevorstehenden Bremsvorgangs des Fahrzeugs F aufweisen.

Das Luftleitelement 2 kann ausgeführt sein, um in Abhängigkeit eines von der Bremsvorgang-Erfassungs-Vorrichtung erfassten Bremsvorgangs z. B. mittels einer elektronischen Fahrzeugsteuereinrichtung angesteuert zu werden, so dass es für einen durch die Bremsvorgang-Erfassungs-Vorrichtung erfassten Bremsvorgang in den Öffnungszustand gebracht wird, hingegen im Fahrbetrieb des Fahrzeugs F ohne Bremsvorgang in einen Schließzustand gebracht wird, zur zweckmäßig aerodynamischen Abschirmung der Einrichtung 1 vor Fahrtwind.

Figur 2 zeigt eine Vorderansicht des Fahrzeugs F der Figur 1. In Figur 2 ist das Luftleitelement 2 geschlossen. Das Luftleitelement 2 umfasst mehrere, vorzugsweise voneinander separierte Teilabschnitte.

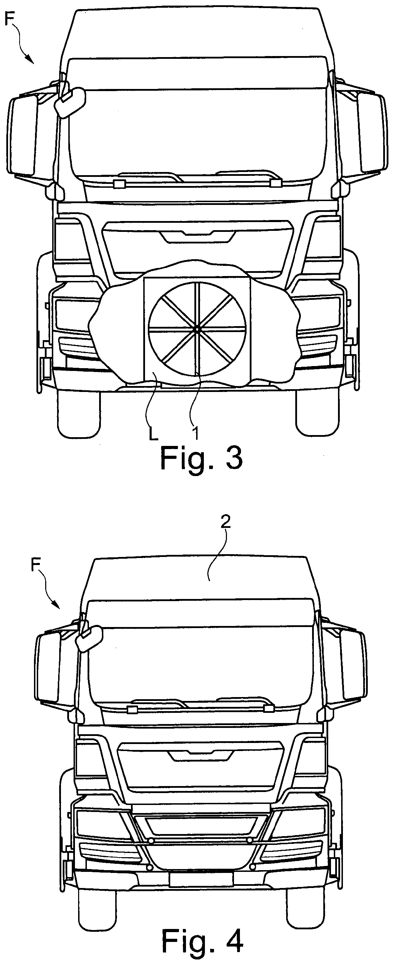

Figur 3 zeigt eine Vorderansicht des Fahrzeugs F der Figuren 1 und 2 mit einer Weglassung zu Illustrationszwecken. Zu sehen ist nochmals die Einrichtung 1 zur Windenergiegewinnung (Windrad, insbesondere Lüfterrad) und der in Fahrtwindrichtung R dahinter angeordnete Fahrzeugkühler L.

Figur 4 zeigt eine Vorderansicht eines Fahrzeugs F gemäß einer Ausführungsform der Erfindung mit geschlossenem Luftleitelement 2 zur Abschirmung der Einrichtung 1.

Das Fahrzeug F umfasst ein Fahrerhaus, insbesondere ein Fernfahrerhaus. Das Luftleitelement 2 ist als Dachklappe auf dem Fahrzeugdach ausgeführt.

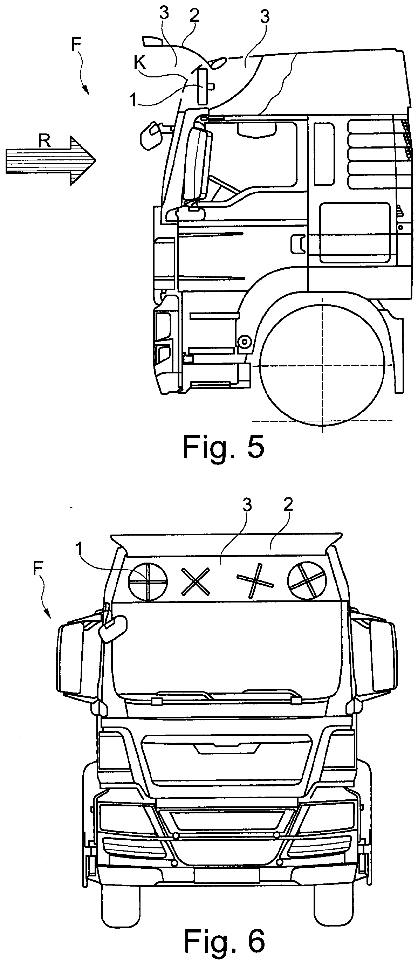

Figur 5 zeigt eine Seitenansicht des Fahrzeugs F der Figur 4 mit geöffnetem Luftleitelement 2, so dass die auf oder im Fahrzeugdach angeordnete Einrichtung 1 zur Fahrtwindanströmung freigelegt ist.

Das Luftleitelement 2 ist so ausgeformt und verstellbar, insbesondere verschwenkbar, dass es insbesondere während eines Bremsvorgangs des Fahrzeugs F Fahrtwind einfangen kann und somit zweckmäßig ein Fahrtwind-Fangmaul ausbildet, und vorzugsweise zugleich den Fahrtwind hin zur Einrichtung 1 lenkt. Es wird ersichtlich, dass das Luftleitelement 2 während eines Bremsvorgangs des Fahrzeugs F und somit im Öffnungszustand die Fahrtwindanströmfläche des Fahrzeugs F gegenüber einem Fahrbetrieb des Fahrzeugs F ohne Bremsvorgang und somit im Schließzustand erhöht, wodurch der Bremsvorgang des Fahrzeugs F unterstützt wird. Das Luftleitelement 2 kann Fahrtwind von außerhalb der in Figur 5 schematisch dargestellten (eigentlichen) Fahrzeugkontur K einfangen.

In Figur 5 ist ferner ein Luftleitschacht 3 stromabwärts der Einrichtung 1 ausgebildet, so dass Fahrtwind aus der Einrichtung 1 abgeführt werden kann.

Bezugszeichen 3 kennzeichnet zugleich einen stromaufwärts der Einrichtung 1 wirkende Fahrtwindstauraum. Das Fahrtwind-Fangmaul, insbesondere dessen Fahrtwindstauraum 3, wird zwischen dem Luftleitelement 2 im Öffnungszustand, einem darunter angeordneten Fahrzeugdachbereich und dem Fahrzeugfrontbereich gebildet.

Figur 6 zeigt eine Vorderansicht des Fahrzeugs F der Figuren 4 und 5 mit geöffnetem Luftleitelement 2, so dass die Einrichtung 1 zur Windenergiegewinnung freigelegt wird.

Bei der in Figur 6 gezeigten Ausführungsform sind beispielhaft vier Einrichtungen 1 zur Windenergiegewinnung und ein Luftleitelement 2 vorhanden. Im Rahmen der Erfindung können allerdings mehrere zweckmäßig verstellbare Luftleitelemente 2, insbesondere Dachklappen, verwendet werden, insbesondere dann, wenn die Einrichtungen 1 verschiedene Verbraucher versorgen sollen und/oder verschiedene Umwandlungsenergien erzeugen sollen.

Den Figuren 5 und 6 kann ferner entnommen werden, dass die Einrichtung 1 so auf dem Fahrzeugdach angeordnet ist, insbesondere darin integriert ist, dass sie nicht nur direkt von Fahrtwind anströmbar ist, sondern zusätzlich auf den Frontbereich, insbesondere die Front-Windschutzscheibe, des Fahrzeugs F treffender Fahrtwind mittels des Frontbereichs und des Luftleitelements 2 zur Einrichtung 1 geleitet wird, was die Effektivität der Einrichtung 1 erhöht.

Die Einrichtung 1 zur Windenergiegewinnung ist im Rahmen der Erfindung vorteilhaft, aber nicht zwingend. So kann das Fahrtwind-Fangmaul auch ohne die Einrichtung 1 zur Windenergiegewinnung als Bremsorgan wirken, so dass die eigentliche Fahrzeugbremsanlage des Fahrzeugs F nicht aktiviert werden muss oder zumindest entlastet werden kann.

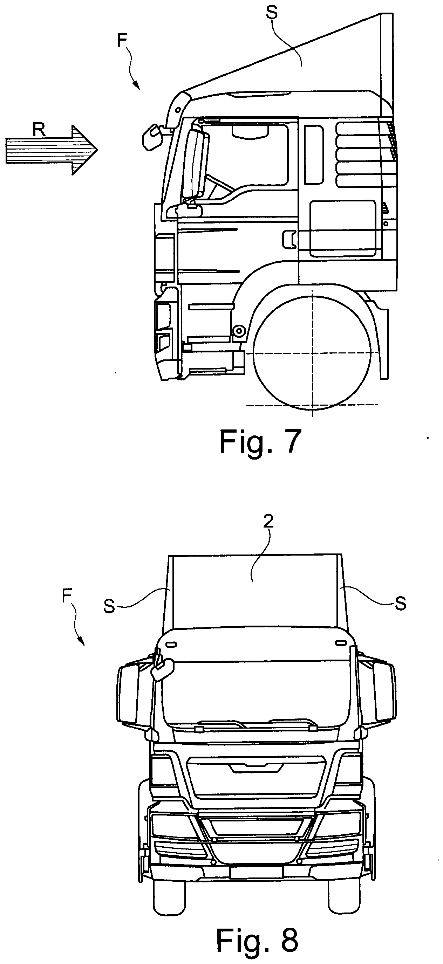

Figur 7 zeigt eine Seitenansicht eines Fahrzeugs F. Bezugszeichen S kennzeichnet Seitenelemente eines Dachspoilers.

Figur 8 zeigt eine Vorderansicht des Fahrzeugs F der Figur 7 mit geschlossenem Luftleitelement 2. Das Luftleitelement 2 ist als vorzugsweise zwischen den Seitenelementen S ausgebildete auf- und zuschwenkbare Spoilerklappe 2 ausgeführt.

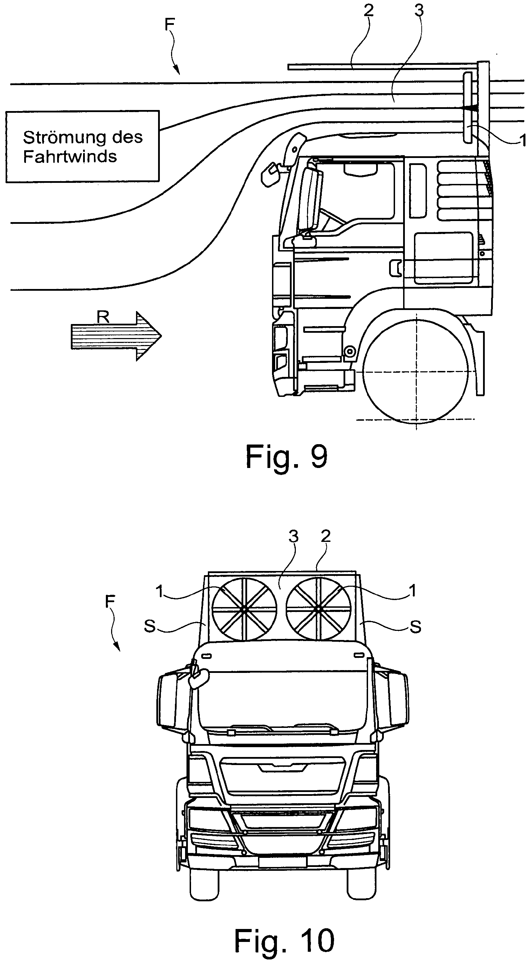

Figur 9 zeigt eine Seitenansicht des Fahrzeugs F der Figuren 7 und 8 mit geöffnetem Luftleitelement 2, so dass Fahrtwind zur Windenergiegewinnung der Einrichtung 1 zugeführt werden kann. Das Luftleitelement 2 erstreckt sich über der Einrichtung 1 entgegen der Fahrtwindrichtung R nach vorne.

Figur 9 zeigt ferner nochmals die Besonderheit, dass das Luftleitelement 2 nicht nur zur Bildung einer bloßen Fahrtwind-Durchlassöffnung ausgeführt ist, sondern im geöffneten Zustand Fahrtwind einfangen und somit als Fahrtwind-Fangmaul fungieren kann.

Bezugszeichen 3 kennzeichnet einen Luftleitschacht, um Fahrtwind zur Einrichtung 1 zu leiten. Bezugszeichen 3 kennzeichnet zugleich einen Fahrtwindstauraum des Fahrtwind-Fangmauls, der durch das Luftleitelement 3 im Öffnungszustand zur Oberseite hin überspannt und begrenzt wird. Figur 9 zeigt, dass das Fahrtwind-Fangmaul zwischen dem Luftleitelement 2 im Öffnungszustand und einem darunter angeordneten Fahrzeugdachbereich ausgebildet wird. Da das Luftleitelement 2 über den Fahrzeugfrontbereich nach vorne hinausragt, wird das Fahrtwind-Fangmaul, insbesondere dessen Fahrtwindstauraum 3, zusätzlich zwischen dem Luftleitelement 2 im Öffnungszustand und einem Fahrzeugfrontbereich ausgebildet, so dass es zusätzlich Fahrtwind vom Fahrzeugfrontbereich einfangen kann.

Aus Figur 9 wird ersichtlich, dass im Rahmen der Erfindung der Luftleitschacht die Funktion des Fahrtwind-Fangmauls oder das Fahrtwind-Fangmaul die Funktion des Luftleitschachts übernehmen kann.

Figur 9 zeigt, dass die Einrichtung 1 nicht nur direkt von Fahrtwind anströmbar ist, sondern ebenfalls auf die Fahrzeugfront auftreffender Fahrtwind zur Einrichtung 1 geleitet wird und/oder von dem Luftleitelement 2 eingefangen und zur Einrichtung 1 geleitet wird.

In Fahrtwindrichtung R hinter der Einrichtung 1 ist ein Fahrzeugbauteil mit zumindest einer Luftdurchlassöffnung angeordnet ist, um die Einrichtung 1 auf der Fahrzeugrückseite zumindest abschnittsweise abzudecken, zugleich aber Fahrtwind aus der Einrichtung 1 hindurchzulassen.

Figur 10 zeigt eine Vorderansicht des Fahrzeugs F der Figuren 7 bis 9 mit geöffnetem Luftleitelement 2 und folglich zur Fahrtwindanströmung freigelegten Einrichtungen 1.

Bei der in den Figuren 7 bis 10 gezeigten Ausführungsform können mehrere verstellbare Luftleitelemente 2 verwendet werden, wenn z. B. einzelne Einrichtungen 1 verschiedenen Fahrzeug-Verbrauchern zugeordnet werden sollen und/oder verschiedene Umwandlungsenergien erzeugen sollen.

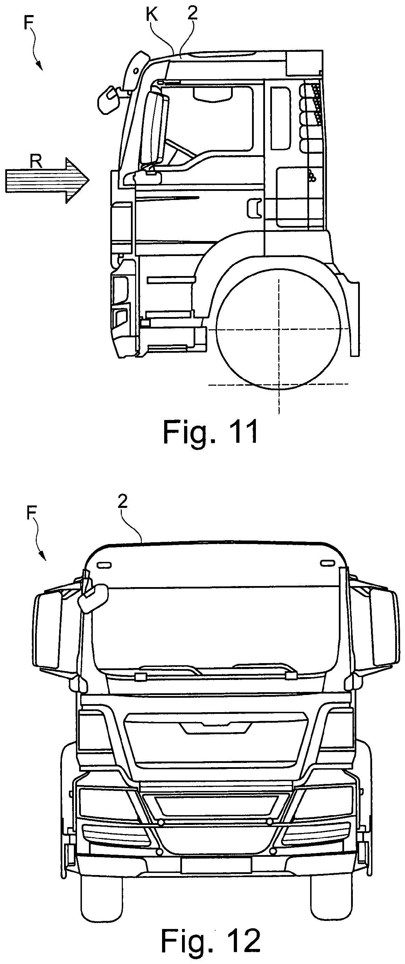

Figur 11 zeigt eine Seitenansicht eines Fahrzeugs F mit geschlossenem Luftleitelement 2. Das Fahrzeug F umfasst ein Fahrerhaus, insbesondere ein Nahverkehrsfahrerhaus.

Das Luftleitelement 2 ist als Fahrerhausdachklappe ausgeführt.

Figur 12 zeigt eine Vorderansicht des Fahrzeugs F der Figur 11 mit geschlossenem Luftleitelement 2.

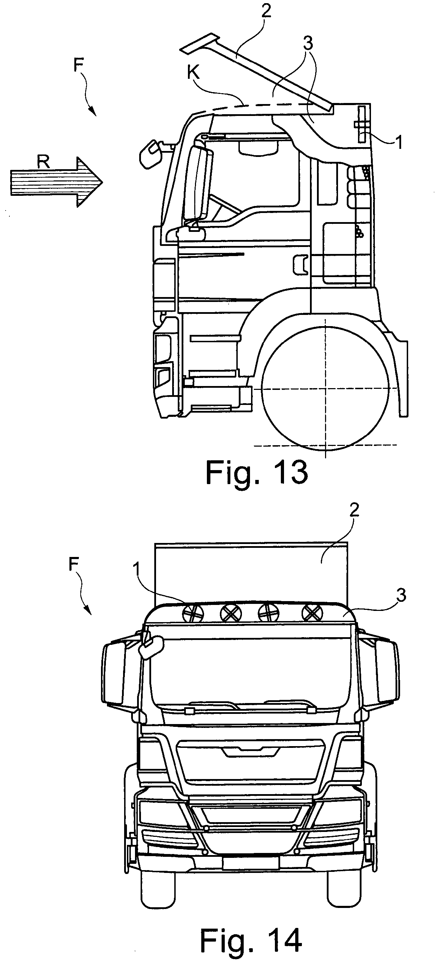

Figur 13 zeigt eine Seitenansicht des Fahrzeugs F der Figuren 11 und 12 mit geöffnetem Luftleitelement 2.

Das Luftleitelement 2 dient wiederum nicht nur dazu, die Einrichtung 1 zur Fahrtwindanströmung freizulegen, sondern ist darüber hinaus so ausgeformt und verstellbar, insbesondere ausschwenkbar, dass es Fahrtwind einfängt, somit als Fahrtwind-Fangmaul fungiert und Fahrtwind zur Einrichtung 1 weiterleitet, obwohl die Einrichtung 1 an einem hinteren Fahrzeugdachabschnitt platziert ist.

Auch in der in Figur 13 gezeigten Ausführungsform fängt das Luftleitelement 2 Fahrtwind ein, der auf die Fahrzeugfront trifft und von der Fahrzeugfront nach oben weitergeleitet wird. Der von dem Luftleitelement 2 eingefangene Fahrtwind kann über einen im oder am Fahrzeugdach ausgebildeten Luftleitschacht 3 zur Einrichtung 1 geführt werden. Der Luftleitschacht 3 bildet stromaufwärts der Einrichtung 1 wiederum einen Fahrtwindstauraum.

Aus Figur 13 wird ferner ersichtlich, dass das geöffnete Luftleitelement 2 insbesondere während eines Bremsvorgangs des Fahrzeugs F die Fahrtwindanströmfläche des Fahrzeugs F gegenüber einem Fahrbetrieb des Fahrzeugs F ohne Bremsvorgang und somit mit geschlossenem Luftleitelement 2 erhöhen kann.

Figur 14 zeigt eine Vorderansicht des Fahrzeugs F der Figuren 11 bis 13 mit geöffnetem Luftleitelement 2. Figur 14 zeigt, dass das Fahrzeug F mehrere Einrichtungen 1 umfasst.

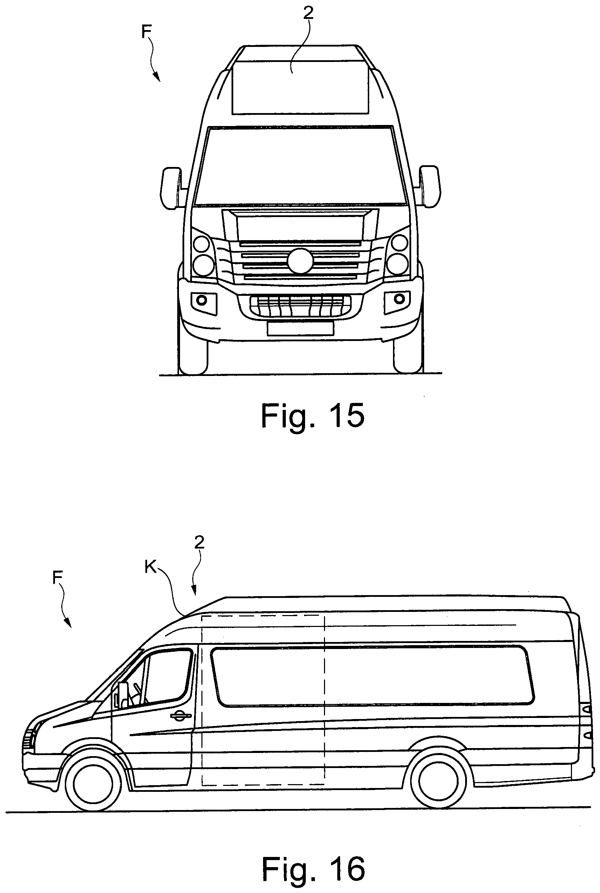

Figur 15 zeigt eine Vorderansicht eines Fahrzeugs F gemäß einer Ausführungsform der Erfindung mit geschlossenem Luftleitelement 2. Das Fahrzeug F ist ein Kraftfahrzeug in Form eines Lieferwagens.

Figur 16 zeigt eine Seitenansicht des Fahrzeugs F der Figur 15 ebenfalls mit geschlossenem Luftleitelement 2.

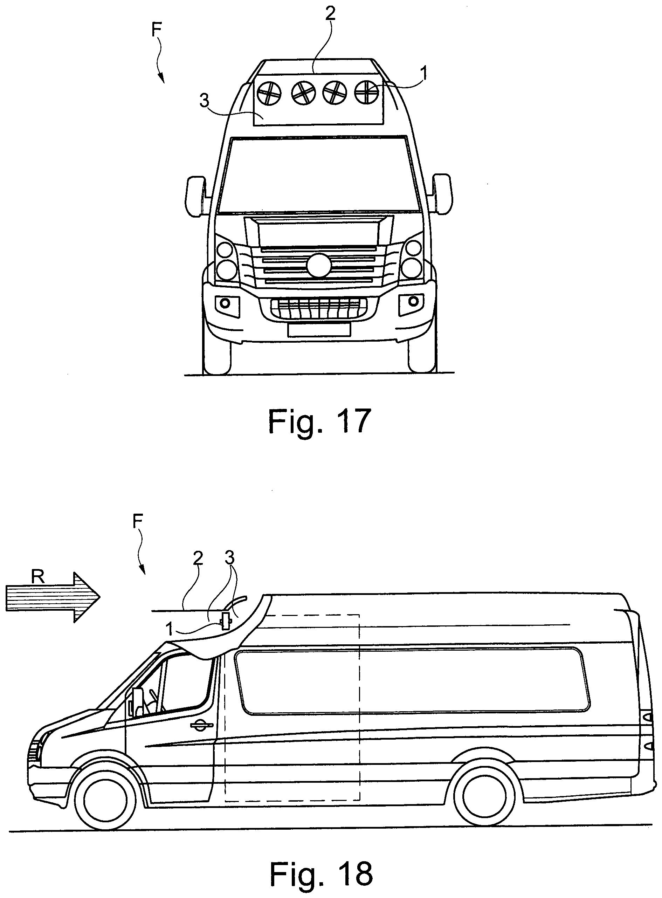

Figur 17 zeigt eine Vorderansicht des Fahrzeugs F der Figuren 15 und 16 mit geöffnetem Luftleitelement 2 und mehreren freigelegten Einrichtungen 1 zur Windenergiegewinnung.

Figur 18 zeigt eine Seitenansicht des Fahrzeugs F der Figuren 15 bis 17 mit geöffnetem Luftleitelement 2 und einem Luftleitschacht/Fahrtwindstauraum 3 auf bzw. in dem Fahrzeugdach.

### Bezugszeichenliste

- 1: Einrichtung zur Windenergiegewinnung mittels Fahrtwind
- 2: Luftleitelement
- 3: Luftleitschacht und/oder Fahrtwindstauraum, vorzugsweise am Fahrzeugdach oder darin integriert
- L: Fahrzeugkühler
- R: Fahrtwind bzw. Fahrtwindrichtung
- S: Dachspoiler-Seitenelement
- F: Fahrzeug
- K: (Eigentliche) Fahrzeugkontur, insbesondere mit Luftleitelement im Schließzustand

## Patentansprüche

1. Fahrzeug (F), nämlich Lastkraftwagen oder Transporter, mit
einer Einrichtung (1) zur Windenergiegewinnung mittels Fahrtwind, nämlich zumindest einem Windrad und/oder zumindest einer Windturbine, und zumindest einem öffen- und schließbaren Luftleitelement (2), um in einem Öffnungszustand die Einrichtung (1) zur Windenergiegewinnung mittels Fahrtwind freizulegen und um in einem Schließzustand die Einrichtung (1) von Fahrtwind abzuschirmen, **dadurch gekennzeichnet, dass** die Einrichtung (1) in einem vorderen Fahrzeugdachabschnitt des Lastkraftwagens oder des Transporters integriert ist.

2. Fahrzeug (1) nach Anspruch 1, **dadurch gekennzeichnet, dass** das Luftleitelement (2) in das Fahrzeugdach integriert ist und, vorzugsweise, in einem Öffnungszustand ein Fahrtwind-Fangmaul zum Einfangen von Fahrtwind bildet.

3. Fahrzeug (F) nach einem der vorhergehenden Ansprüche, **dadurch gekennzeichnet, dass** das Luftleitelement (2) ausgeführt ist, um im Öffnungszustand ein Fahrtwind-Fangmaul zum Einfangen von Fahrtwind von außerhalb der Fahrzeugkontur (K), die durch das Luftleitelement (2) im Schließzustand gebildet wird, auszubilden.

4. Fahrzeug (F) nach einem der vorhergehenden Ansprüche, **dadurch gekennzeichnet, dass** das Luftleitelement (2) im Öffnungszustand den Luftwiderstand und/oder die Fahrtwindanströmfläche des Fahrzeugs (F) vergrößert.

5. Fahrzeug (F) nach einem der vorhergehenden Ansprüche, **dadurch gekennzeichnet, dass** das Fahrtwind-Fangmaul zwischen dem Luftleitelement (2) im Öffnungszustand und einem darunter angeordneten Fahrzeugdachbereich ausgebildet wird.

6. Fahrzeug (F) nach einem der vorhergehenden Ansprüche, **dadurch gekennzeichnet, dass** das Fahrtwind-Fangmaul einen Fahrtwindstauraum (3) umfasst und das Luftleitelement (2) den Fahrtwindstauraum (3) zur Oberseite hin begrenzt und/oder überspannt.

7. Fahrzeug (F) nach einem der vorhergehenden Ansprüche, **dadurch gekennzeichnet, dass** das Luftleitelement (2) im Öffnungszustand entgegen der Fahrtwindrichtung (R) nach vorne auskragt.

8. Fahrzeug (F) nach einem der vorhergehenden Ansprüche, **dadurch gekennzeichnet, dass** das Luftleitelement (2) zumindest ein öffen- und schließbares Dachelement umfasst.

9. Fahrzeug (F) nach einem der vorhergehenden Ansprüche, **dadurch gekennzeichnet, dass** das Luftleitelement (2) zumindest eine verstellbare Klappe, Rollo und/oder Jalousie umfasst.

10. Fahrzeug (F) nach einem der vorhergehenden Ansprüche, **dadurch gekennzeichnet, dass** das Luftleitelement (2) im Schließzustand abschnittsweise einen Teil des Fahrzeugdachs und abschnittsweise einen Teil der Fahrzeugfront bildet.

11. Fahrzeug (F) nach einem der vorhergehenden Ansprüche, **dadurch gekennzeichnet, dass** das Luftleitelement (2) mehrere Öffnungszustände aufweist, vorzugsweise so dass die Fahrtwindanströmung der Einrichtung (1) zweckmäßig beeinflussbar ist.

12. Fahrzeug (F) nach einem der vorhergehenden Ansprüche, **dadurch gekennzeichnet, dass** das Fahrzeug (F) zumindest eine Umwandlungseinrichtung zur Umwandlung gewonnener Windenergie in elektrische Energie, hydraulische Energie, Druckluft-Energie und/oder Gyro-Energie aufweist.

13. Fahrzeug (F) nach einem der vorhergehenden Ansprüche, **dadurch gekennzeichnet, dass** die Einrichtung (1) im Öffnungszustand des Luftleitelements (2) angeordnet ist, so dass die Einrichtung (1) von Fahrtwind direkt anströmbar ist und zusätzlich Fahrtwind auf den Frontbereich des Fahrzeugs (F) über den Frontbereich zur Einrichtung (1) leitbar ist.

14. Fahrzeug (F) nach einem der vorhergehenden Ansprüche, **dadurch gekennzeichnet, dass** das Fahrzeug (F) einen Luftleitschacht (3) aufweist, um Fahrtwind zur Einrichtung (1) zu leiten und/oder Fahrtwind aus der Einrichtung (1) weiterzuleiten, und vorzugsweise der Luftleitschacht (3) zumindest abschnittsweise durch das Luftleitelement (2) begrenzt wird.

15. Fahrzeug (F) nach Anspruch 14, **dadurch gekennzeichnet, dass** der Luftleitschacht (3) auf dem Fahrzeugdach angeordnet oder darin integriert ist.

16. Fahrzeug (F) nach Anspruch 14 oder 15, **dadurch gekennzeichnet, dass** sich der Querschnitt des Luftleitschachts (3), vorzugsweise im Öffnungszustand des Luftleitelements (2), zur Einrichtung (1) hin verjüngt.

17. Fahrzeug (F) nach einem der vorhergehenden Ansprüche, **dadurch gekennzeichnet, dass** ein Fahrzeugbauteil mit zumindest einer Luftdurchlassöffnung in Fahrtwindrichtung (R) hinter der Einrichtung (1) angeordnet ist, um die Einrichtung (1) auf der Fahrzeugrückseite zumindest abschnittsweise abzudecken, zugleich aber Fahrtwind aus der Einrichtung (1) hindurchzulassen.

18. Fahrzeug (F) nach einem der vorhergehenden Ansprüche, **dadurch gekennzeichnet, dass** das Fahrzeug (F) mehrere Einrichtungen (1) zur Windenergiegewinnung aufweist und den einzelnen Einrichtungen (1) verschiedene Fahrzeug-Verbraucher und/oder verschiedene Umwandlungsenergien zugeordnet sind.

19. Fahrzeug (F) nach einem der vorhergehenden Ansprüche, **dadurch gekennzeichnet, dass** das Fahrzeug (F) mehrere Einrichtungen (1) zur Windenergiegewinnung aufweist und den einzelnen Einrichtungen (1) unabhängig voneinander betreibbare Luftleitelemente (2) zugeordnet sind.

20. Fahrzeug (F) nach einem der vorhergehenden Ansprüche, **dadurch gekennzeichnet, dass** das Fahrzeug (F) eine Steuereinrichtung umfasst, um das Luftleitelement (2) für einen Bremsvorgang des Fahrzeugs (F) in den Öffnungszustand zu bringen und/oder für einen Fahrbetrieb des Fahrzeugs (F) ohne Bremsvorgang das Luftleitelement (2) in den Schließzustand zu bringen.

21. Fahrzeug (F) nach einem der vorhergehenden Ansprüche, **dadurch gekennzeichnet, dass** das Fahrzeug (F) eine Bremsvorgangs-Erfassungs-Vorrichtung zum Erfassen eines Bremsvorgangs des Fahrzeugs (F) aufweist und das Luftleitelement (2) mit der Bremsvorgangs-Erfassungs-Vorrichtung in Wirkverbindung steht, um in Reaktion auf einen erfassten Bremsvorgang geöffnet zu werden, so dass es für einen Bremsvorgangs des Fahrzeugs (F) in den Öffnungszustand gebracht wird.

22. Fahrzeug (F) nach einem der vorhergehenden Ansprüche, **dadurch gekennzeichnet, dass** das Fahrzeug (F) eine zweckmäßig elektronische Steuereinrichtung umfasst und die Steuereinrichtung ausgeführt ist, um zunächst das Luftleitelement (2) in einen Öffnungszustand zu bringen, was zu einem Bremsvorgang des Fahrzeugs (F) führt, und um eine Fahrzeugbremsanlage erst bei höherer Bremsanforderung des Fahrzeugs (F) zu aktivieren, insbesondere dazu zuschalten, wodurch eine zusätzliche Bremswirkung erreichbar ist.

23. Fahrzeug (F) nach einem der Ansprüche 20 bis 22, **dadurch gekennzeichnet, dass** der Bremsvorgang einen Bergabfahrt-Bremsvorgang des Fahrzeugs (F) umfasst und zu einer Geschwindigkeitsreduzierung des Fahrzeugs (F) führt oder dazu, dass das Fahrzeug (F) mit im Wesentlichen konstanter Geschwindigkeit die Bergabfahrt durchführt.

## Claims

1. A vehicle (F), namely a lorry or transporter, comprising a device (1) for wind energy harvesting by means of headwind, namely at least one wind wheel and/or at least one wind turbine, and at least one openable and closable air-guiding element (2) in order, in an open state, to expose the device (1) for wind energy harvesting by means of headwind and in order, in a closed state, to shield the device (1) from headwind, **characterized in that** the device (1) is integrated in a front vehicle roof portion of the lorry or of the transporter.

2. The vehicle (1) according to Claim 1, **characterized in that** the air-guiding element (2) is integrated into the vehicle roof and, preferably, in an open state forms a headwind catch mouth for capturing headwind.

3. The vehicle (F) according to one of the preceding claims, **characterized in that** the air-guiding element (2) is configured in order, in the open state, to form a headwind catch mouth for capturing headwind from outside the vehicle contour (K) which is formed by the air-guiding element (2) in the closed state.

4. The vehicle (F) according to one of the preceding claims, **characterized in that**, in the open state, the air-guiding element (2) increases the air resistance and/or the headwind impingement area of the vehicle (F).

5. The vehicle (F) according to one of the preceding claims, **characterized in that** the headwind catch mouth is formed between the air-guiding element (2) in the open state and a vehicle roof region arranged below it.

6. The vehicle (F) according to one of the preceding claims, **characterized in that** the headwind catch mouth comprises a headwind accumulation space (3), and the air-guiding element (2) delimits the headwind accumulation space (3) towards the upper side and/or spans said space.

7. The vehicle (F) according to one of the preceding claims, **characterized in that**, in the open state, the air-guiding element (2) projects forwards counter to the headwind direction (R).

8. The vehicle (F) according to one of the preceding claims, **characterized in that** the air-guiding element (2) comprises at least one openable and closable roof element.

9. The vehicle (F) according to one of the preceding claims, **characterized in that** the air-guiding element (2) comprises at least one adjustable flap, roller blind and/or louvre.

10. The vehicle (F) according to one of the preceding claims, **characterized in that**, in the closed state, the air-guiding element (2) forms in certain portions a part of the vehicle roof and in certain portions a part of the vehicle front.

11. The vehicle (F) according to one of the preceding claims, **characterized in that** the air-guiding element (2) has a plurality of open states, preferably such that the headwind impingement of the device (1) can be expediently influenced.

12. The vehicle (F) according to one of the preceding claims, **characterized in that** the vehicle (F) has at least one conversion device for converting harvested wind energy into electrical energy, hydraulic energy, compressed air energy and/or gyroscopic energy.

13. The vehicle (F) according to one of the preceding claims, **characterized in that**, in the open state of the air-guiding element (2), the device (1) is arranged such that the device (1) can be directly impinged by headwind, and, in addition, headwind can be guided onto the front region of the vehicle (F) and via the front region to the device (1).

14. The vehicle (F) according to one of the preceding claims, **characterized in that** the vehicle (F) has an air-guiding shaft (3) in order to guide headwind to the device (1) and/or to forward headwind from the device (1), and preferably the air-guiding shaft (3) is delimited at least in certain portions by the air-guiding element (2).

15. The vehicle (F) according to Claim 14, **characterized in that** the air-guiding shaft (3) is arranged on or integrated in the vehicle roof.

16. The vehicle (F) according to Claim 14 or 15, **characterized in that** the cross section of the air-guiding shaft (3) tapers towards the device (1), preferably in the open state of the air-guiding element (2).

17. The vehicle (F) according to one of the preceding claims, **characterized in that** a vehicle component having at least one air passage opening is arranged behind the device (1) in the headwind direction (R) in order to cover the device (1) on the vehicle rear side at least in certain portions, but at the same time to let headwind out through the device (1).

18. The vehicle (F) according to one of the preceding claims, **characterized in that** the vehicle (F) has a plurality of devices (1) for wind energy harvesting, and various vehicle consumers and/or various conversion energies are assigned to the individual devices (1).

19. The vehicle (F) according to one of the preceding claims, **characterized in that** the vehicle (F) has a plurality of devices (1) for wind energy harvesting, and air-guiding elements (2) which can be operated independently of one another are assigned to the individual devices (1).

20. The vehicle (F) according to one of the preceding claims, **characterized in that** the vehicle (F) comprises a control device in order to bring the air-guiding element (2) into the open state for a braking operation of the vehicle (F) and/or in order to bring the air-guiding element (2) into the closed state for a driving mode of the vehicle (F) without braking operation.

21. The vehicle (F) according to one of the preceding claims, **characterized in that** the vehicle (F) has a braking operation detection device for detecting a braking operation of the vehicle (F), and the air-guiding element (2) is in operative connection with the braking operation detection device in order to be opened in response to a detected braking operation such that it is brought into the open state for a braking operation of the vehicle (F).

22. The vehicle (F) according to one of the preceding claims, **characterized in that** the vehicle (F) comprises an expediently electronic control device, and the control device is configured in order first to bring the air-guiding element (2) into an open state, which leads to a braking operation of the vehicle (F), and in order to activate, in particular to engage, a vehicle brake system only under a higher braking requirement of the vehicle (F), with the result that an additional braking action can be achieved.

23. The vehicle (F) according to one of Claims 20 to 22, **characterized in that** the braking operation comprises a downhill braking operation of the vehicle (F) and leads to a speed reduction of the vehicle (F) or to the fact that the vehicle (F) carries out the downhill travel at a substantially constant speed.

## Revendications

1. Véhicule (F), à savoir camion ou camionnette, avec un dispositif (1) pour la production d'énergie éolienne au moyen du vent de déplacement, à savoir au moins une roue éolienne et/ou au moins une turbine éolienne, et au moins un élément de guidage d'air pouvant être ouvert et fermé (2), pour libérer le dispositif (1) de production d'énergie éolienne au moyen du vent de déplacement dans un état ouvert et pour le protéger du vent de déplacement dans un état fermé, **caractérisé en ce que** le dispositif (1) est intégré dans une partie avant du toit de véhicule du camion ou de la camionnette.

2. Véhicule (1) selon la revendication 1, **caractérisé en ce que** l'élément de guidage d'air (2) est intégré dans le toit du véhicule et forme de préférence, dans un état ouvert, une ouïe de prise de vent de déplacement pour capter du vent de déplacement.

3. Véhicule (F) selon l'une quelconque des revendications précédentes, **caractérisé en ce que** l'élément de guidage d'air (2) est réalisé de façon à former dans l'état ouvert une ouïe de prise de vent de déplacement pour capter du vent de déplacement depuis l'extérieur du contour de véhicule (K), qui est formé par l'élément de guidage d'air (2) dans l'état fermé.

4. Véhicule (F) selon l'une quelconque des revendications précédentes, **caractérisé en ce que** l'élément de guidage d'air (2) augmente dans l'état ouvert la résistance aérodynamique et/ou la surface du véhicule (F) offerte au vent de déplacement.

5. Véhicule (F) selon l'une quelconque des revendications précédentes, **caractérisé en ce que** l'ouïe de prise de vent de déplacement est formée entre l'élément de guidage d'air (2) dans l'état ouvert et une région de toit de véhicule située en dessous de celui-ci.

6. Véhicule (F) selon l'une quelconque des revendications précédentes, **caractérisé en ce que** l'ouïe de prise de vent de déplacement comprend une chambre d'accumulation de vent de déplacement (3) et l'élément de guidage d'air (2) limite et/ou recouvre la chambre d'accumulation de vent de déplacement (3) vers le côté supérieur.

7. Véhicule (F) selon l'une quelconque des revendications précédentes, **caractérisé en ce que** l'élément de guidage d'air (2) dans l'état ouvert est saillant vers l'avant à l'inverse de la direction du vent de déplacement (R).

8. Véhicule (F) selon l'une quelconque des revendications précédentes, **caractérisé en ce que** l'élément de guidage d'air (2) comprend au moins un élément de toit pouvant être ouvert et fermé.

9. Véhicule (F) selon l'une quelconque des revendications précédentes, **caractérisé en ce que** l'élément de guidage d'air (2) comprend au moins un clapet, un store et/ou une jalousie réglable.

10. Véhicule (F) selon l'une quelconque des revendications précédentes, **caractérisé en ce que** l'élément de guidage d'air (2) forme dans l'état fermé en partie une partie du toit du véhicule et en partie une partie de l'avant du véhicule.

11. Véhicule (F) selon l'une quelconque des revendications précédentes, **caractérisé en ce que** l'élément de guidage d'air (2) présente plusieurs états d'ouverture, de préférence de telle manière que l'impact du vent de déplacement sur le dispositif (1) puisse être efficacement influencé.

12. Véhicule (F) selon l'une quelconque des revendications précédentes, **caractérisé en ce que** le véhicule (F) présente au moins un dispositif de conversion pour la conversion de l'énergie éolienne produite en énergie électrique, en énergie hydraulique, en énergie pneumatique et/ou en gyro-énergie.

13. Véhicule (F) selon l'une quelconque des revendications précédentes, **caractérisé en ce que** le dispositif (1) est disposé, dans l'état ouvert de l'élément de guidage d'air (2), de telle manière que le dispositif (1) puisse être frappé directement par le vent de déplacement et que le vent de déplacement frappant la région avant du véhicule (F) puisse en outre être conduit par la région avant vers le dispositif (1).

14. Véhicule (F) selon l'une quelconque des revendications précédentes, **caractérisé en ce que** le véhicule (F) présente un puits de guidage d'air (3), pour conduire du vent de déplacement vers le dispositif (1) et/ou mener du vent de déplacement hors du dispositif (1) et le puits de guidage d'air (3) est de préférence limité au moins en partie par l'élément de guidage d'air (2).

15. Véhicule (F) selon la revendication 14, **caractérisé en ce que** le puits de guidage d'air (3) est disposé sur le toit du véhicule ou intégré dans celui-ci.

16. Véhicule (F) selon la revendication 14 ou 15, **caractérisé en ce que** la section transversale du puits de guidage d'air (3) diminue en direction du dispositif (1), de préférence dans l'état ouvert de l'élément de guidage d'air (2).

17. Véhicule (F) selon l'une quelconque des revendications précédentes, **caractérisé en ce qu'**un composant du véhicule avec au moins une ouverture de passage d'air est disposé dans la direction du vent de déplacement (R) derrière le dispositif (1), afin de recouvrir au moins en partie le dispositif (1) sur le côté arrière du véhicule, mais en même temps de permettre l'échappement de vent de déplacement hors du véhicule (1) .

18. Véhicule (F) selon l'une quelconque des revendications précédentes, **caractérisé en ce que** le véhicule (F) présente plusieurs dispositifs (1) de production d'énergie éolienne et différents consommateurs du véhicule et/ou différentes énergies de conversion sont associés aux dispositifs individuels (1).

19. Véhicule (F) selon l'une quelconque des revendications précédentes, **caractérisé en ce que** le véhicule (F) présente plusieurs dispositifs (1) de production d'énergie éolienne et des éléments de guidage d'air (2) utilisables indépendamment l'un de l'autre sont associés aux dispositifs individuels (1).

20. Véhicule (F) selon l'une quelconque des revendications précédentes, **caractérisé en ce que** le véhicule (F) comprend un dispositif de commande, afin d'amener l'élément de guidage d'air (2) dans l'état ouvert pour un freinage du véhicule (F) et/ou d'amener l'élément de guidage d'air (2) dans l'état fermé pour une marche du véhicule (F) sans freinage.

21. Véhicule (F) selon l'une quelconque des revendications précédentes, **caractérisé en ce que** le véhicule (F) présente un dispositif de détection de freinage pour détecter le freinage du véhicule (F) et l'élément de guidage d'air (2) est en liaison active avec le dispositif de détection de freinage, afin d'être ouvert en réaction à un freinage détecté, de telle manière qu'il soit amené dans l'état ouvert pour un freinage du véhicule (F).

22. Véhicule (F) selon l'une quelconque des revendications précédentes, **caractérisé en ce que** le véhicule (F) comprend un dispositif de commande avantageusement électronique et le dispositif de commande est conçu pour amener d'abord l'élément de guidage d'air (2) dans un état ouvert, ce qui conduit à un freinage du véhicule (F), et pour activer une installation de freinage du véhicule seulement lorsque la demande de freinage du véhicule (F) est plus forte, en particulier pour la connecter à cet effet, permettant ainsi d'obtenir un effet de freinage supplémentaire.

23. Véhicule (F) selon l'une quelconque des revendications 20 à 22, **caractérisé en ce que** le freinage comprend un freinage du véhicule (F) en descente et conduit à une diminution de la vitesse du véhicule (F) ou à ce que le véhicule (F) effectue la descente avec une vitesse essentiellement constante.
